# EUROPÄISCHE PATENTSCHRIFT

(11) **EP 1 051 053 B1**
(45) Veröffentlichungstag und Bekanntmachung des Hinweises auf die Patenterteilung: **09.07.2003**
(21) Anmeldenummer: 00107879.9
(22) Anmeldetag: 12.04.2000
(51) Int. Cl.: H04Q 7/38

(54) **Verfahren zum Identifizieren des Benutzers eines Mobiltelefons oder zum Mithören der abgehenden Gespräche**
Method for identifying a mobile phone user or for eavesdropping on outgoing calls
Procédé pour identifier un utilisateur d'un téléphone mobile ou pour écouter les appels émanants

(30) Priorität: 03.05.1999 DE 19920222
(43) Veröffentlichungstag der Anmeldung: 08.11.2000
(73) Patentinhaber: Rohde & Schwarz GmbH & Co. KG, D-81671 München (DE)
(72) Erfinder: Frick, Joachim, 86391 Stadtbergen (DE); Bott, Rainer, 82346 Andechs (DE)
(74) Vertreter: Graf, Walter, Dipl.-Ing.

(56) Entgegenhaltungen:
- DE-A- 19 651 334
- US-A- 5 428 667
- US-A- 5 483 666
- US-A- 5 875 397

## Beschreibung

Die Erfindung betrifft ein Verfahren zum Identifizieren des Benutzers eines Mobiltelefons in einem öffentlichen digitalen zellularen Mobilfunknetz sowie zum Mithören von abgehenden Gesprächen dieses Mobiltelefons.

Bei modernen öffentlichen digitalen zellularen Mobilfunknetzen besteht im öffentlichen Interesse oftmals die Notwendigkeit, den Benutzer eines Mobiltelefons durch Ermittlung seiner IMSI (International Mobile Subscriber Identity (Internationale Mobilteilnehmerkennung)) bzw. der IMEI (International Mobile Station Equipment Identity (Mobilgerätekennung)) des von ihm benutzten Mobiltelefons zu identifizieren oder sogar die Gespräche dieses Benutzers abzuhören.

Zum Stand der Technik ist das Patent US 5,875,397 bekannt, welches ein Kommunikationssystem mit einer Kommunikationsvorrichtung, eine Testvorrichtung und ein Testverfahren zum testen der Kommunikationsvorrichtung betrifft. Die Kommunikationsvorrichtung beinhaltet mindestens ein Telefon und mindestens eine Übertragungseinrichtung zum Übertragen von Signalen. Die Testvorrichtung beinhaltet eine zentrale Signalprozessvorrichtung mit mindestens einer programmierbaren Vorrichtung zum Verarbeiten von Daten zur Erzeugung von digitalen Testsignalen zum Testen der Kommunikationsvorrichtung und einer Umformvorrichtung, die mit der programmierbaren Vorrichtung zum Verarbeiten von Daten verbunden ist. Die Umformvorrichtung ist so konstruiert, daß sie die digitalen Testsignale der Vorrichtung zum Verarbeiten von Daten unter der Kontrolle von telefonspezifischen Konfigurationsdaten in Steuersignale, die zur Steuerung der Telefontastatur und des Telefonmikrofons des Telefons über eine Verbindungsvorrichtung umwandelt. Weiterhin wandelt die Umformvorrichtung Antwortsignale, die vom Lautsprecher und von der Rufvorrichtung des mindestens einen Telefons empfangen werden, in digitale Steuerantwortsignale um und überträgt sie zur programmierbaren Vorrichtung zum Verarbeiten von Daten, wo sie gespeichert und ausgewertet werden.

Patent US 5,483,666 offenbart ein Verfahren und eine Vorrichtung zur Zuweisung eines Funkkanals in einem Kleinzellensystem, das in dem selben Frequenzband arbeitet wie ein übergeordnetes zellulares System. Dazu besitzt das Kleinzellensystem einen Mehrkanalwahlempfänger, der die Belegung der Funkkanäle des Frequenzbandes um diese unbesetzten Kanäle seinem Kleinzellensystem auf unbesetzte Kanäle überwacht, zuzuweisen. Sobald ein Funkkanal angefordert wird, kann die Basisstation des Kleinzellensystems einen zugewiesenen unbelegten Kanal belegen.

Das Patent US 5,428,667 beschreibt ein mehrkanaliges zellulares Kommunikationsabhörsystem zum Überwachen und Abhören von Kommunikation zwischen einer Mobileinheit und einer Basisstation in einer Zelle eines zellularen Telefonsystems. Das Kommunikationsabhörsystem beinhaltet einen Kontroller und eine Anzahl von Empfängern, wobei jeder Empfänger den Vorwärtskontrollkanal einer anderen Zelle in einem bestimmten geographischen Gebiet, welches von Interesse ist, überwacht. Wird eine Global-page für eine Zielmobileinheit empfangen, die die aktivierte Zielmobileinheit zur Identifikation veranlaßt, so wird einer der Empfänger des Kommunikationsabhörsystems auf den Vorwärtssprachkanal der Zielmobileinheit gestimmt, auf dem die Zielmobileinheit senden wird, um das Gespräch zu überwachen und/oder aufzuzeichnen. Die restlichen Empfänger werden auf die stärksten Vorwärtskontrollkanäle des Gebiets zurückgestimmt.

Es ist daher Aufgabe der Erfindung, den hierzu berechtigten öffentlichen Diensten, wie z. B. der Polizei, ein Verfahren zur Verfügung zu stellen, mit dem in einem digitalen zellularen Mobilfunknetz beliebige Benutzer von Mobiltelefonen identifiziert und ggf. deren Gespräche abgehört werden können.

Diese Aufgabe wird durch die Merkmale des Anspruchs 1 gelöst. Vorteilhafte Weiterbildungen insbesondere bezüglich des Abhörens solcher identifizierter Mobiltelefone und auch bezüglich einer einfachen Geräteeinheit zum Ausführen eines solchen Verfahrens ergeben sich aus den Unteransprüchen.

Die Erfindung wird im Folgenden anhand schematischer Zeichnungen am Ausführungsbeispiel des bekannten GSM-(Global System for Mobile Communications)-Mobilfunknetzes näher erläutert. In der Zeichnung zeigt
- Fig. 1: schematisch die zellulären BTS-Bereiche, ihre Zusammenfassung zu sog. LAC und die idealerweise nahe Lage des Mobiltelefons MS an der VBTS und
- Fig. 2: schematisch die beispielhafte Anschlußmöglichkeiten eines Computer-Notebooks an die VBTS und den Anschluß eines Test-Mobiltelefons sowie die Übertragungsmodi zu einer BTS und der MS.

Die in der nachfolgenden Beschreibung benutzten Abkürzungen und Begriffe sind genormt (ETR 350 GSM 01.04) und werden in der entsprechenden Normvorschrift beispielsweise GSM05.02 näher erläutert. Sie sind außerdem in dem Buch "The GSM System for Mobile Communications" von Michel MOULY und Marie-Bernadette PAUTET näher erläutert, die nachfolgend verwendeten Abkürzungen sind außerdem im INDEX dieses Buches erläutert.

Für die Identifizierung des Benutzers eines Mobiltelefons, das in einem öffentlichen zellularen Mobilfunknetz betrieben wird, ist die Bestimmung der IMSI- bzw. IMEI-Nummer eine wichtige Kenngröße.

Um diese Identifikationskriterien zu erfassen, ist erfindungsgemäß eine virtuelle Basisstation VBTS vorgesehen, ein vorzugsweise mobiles Gerät, das wie eine übliche Netz-Basisstation BTS aufgebaut ist und genauso wie diese betreibbar ist. Diese VBTS steht in unmittelbarer Verbindung mit einem Test-Mobiltelefon TMS. Diesen beiden Geräten ist außerdem eine Auswerteinrichtung vorzugsweise in Form eines Notebooks zugeordnet.

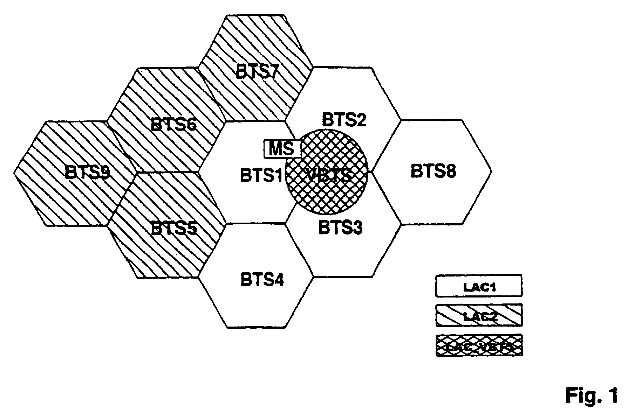

Zur Identifizierung eines Mobiltelefons und zur Abfrage relevanter Parameter, wie z.B. der gewünschten IMSI- und IMEI-Nummern des ausgewählten Mobiltelefons MS wird die VBTS in möglichst räumlicher Nähe des Mobiltelefons MS aufgestellt, so daß bezüglich der VBTS annähernd die gleiche Zellumgebung herrscht wie bei der zu identifizierenden MS, wie dies in Figur 1 schematisch dargestellt ist. Es sei angenommen, daß das Mobiltelefon MS die Basisstation BTS 1 mit dem momentan höchsten Leistungspegel als Betriebszelle ausgewählt hat. Die MS mißt im Normalfall (eingeschalteter Zustand, eingebucht auf die Betriebszelle und Betrieb im IDLEMODE) nur die Pegel der Nachbarzellen, die ihr von der Betriebszelle BTS1 über die sogenannte BA-Liste (Liste der in der Umgebung des MS-betriebenen Basisstationen mit den zugehörigen Kontrollkanälen BCCH) mitgeteilt werden. Damit die MS die zur Identifikation benutzte VBTS wahrnimmt und in ihre Pegelmeßroutine aufnimmt, muß die VBTS eine Kontrollkanalfrequenz BCCH aus dieser BA-Liste der Basisstation BTS 1 abstrahlen.

Dazu muß zunächst eine Zellenabfrage (Cell Monitoring) durchgeführt werden und zwar wie folgt:

Am Standort des VBTS, der möglichst nahe am MS ist, werden die Parameter der Basisstation BTS1 in das Test-Mobiltelefon TMS über eine entsprechende Datenschnittstelle eingelesen und die so empfangene BA-Liste ausgewertet. Aus dieser BA-Liste wird eine der BTS1 benachbarte Basisstation BTSx mit der zugehörigen Kontrollkanalfrequenz BCCH entweder manuell oder automatisch ausgewählt und die Parameter dieser benachbarten Basisstation, beispielsweise BTS2, werden in die VBTS eingelesen und entsprechend modifiziert von dieser abgestrahlt. Durch die Wahl einer benachbarten Zelle BTS2 anstelle von BTS1 wird vermieden, daß laufende Gespräche eventuell abgebrochen werden.

Die am Standort der MS empfangene TX-Leistung der VBTS muß höher als die der Basisstation BTS1 sein, um das Radio-Kriterium C1 für einen Zellenwechsel (Cell-Reselect) zu erfüllen. Dies wird durch entsprechende Senderleistung des VBTS und/oder durch räumliche Nähe der VBTS zur zu identifizierenden MS erreicht.

Wenn diese Radiokriterien erfüllt sind, so kann die MS einen Zellenwechsel auf die VBTS vornehmen.

Im GSM-Netz sind vom Netzbetreiber verschiedene räumlich benachbarte Basisstationen zu sogenannten LAC zusammengefaßt, wie dies für LAC1 und LAC2 in Figur 1 dargestellt ist. Nur wenn ein Wechsel eines Mobiltelefons (im Idle Mode) von LAC1 zu LAC2 erfolgt, ist ein Parameteraustausch zwischen MS und BTS möglich.

Aus diesem Grunde strahlt die VBTS einen von den Zellen in der Nachbarschaft der MS unterschiedlichen LAC ab. Dies wird dadurch erreicht, daß bei der Zellenabfrage mittels des TMS von allen Zellen in der Nachbarschaft der LAC ermittelt wird und dann ein von diesen LAC unterschiedlicher LAC (LAC-VBTS) abgestrahlt wird. Damit wird erreicht, daß mit dem Einbuchen der zu identifizierenden MS bei VBTS die MS auch tatsächlich ihre relevanten Parameter wie IMSI, IMEI und dergleichen Kennungen an die VBTS überträgt und in dieser dann entsprechend ausgewertet werden können.

Solange die VBTS abstrahlt und die Radio-Kriterien für die MS erfüllt sind, bleibt die MS auf der VBTS eingebucht und ist damit vom öffentlichen Netz, also der ihr zugehörigen Basisstation BTS1, abgetrennt. Nach Abschluß der Identifikation der MS soll diese aber im Normalfall möglichst sofort wieder auf die BTS1 oder eine andere Basisstation des öffentlichen Netzes zurückkehren, um wieder erreichbar zu sein. Um dies auch ohne Abschalten des Senders VBTS zu erreichen, wird wie folgt vorgegangen:

Bei allen Mobiltelefonen MS des GSM-Systems ist ein sogenannter downlink signaling counter DSC vorgesehen, nach der GSM-Norm 05.08 6.5 muß gesteuert durch diesen DSC die MS eine neue Basisstation auswählen, wenn der DSC den Wert Null erreicht. Der DSC wertet dabei die Daten aus, die im Rufkanal PCH (Paging Channel ) übertragen werden. Wenn die dort übertragenen Daten richtig decodiert werden, erhöht sich der Zählerstand von DSC um 1, wenn die Decodierung jedoch fehlerhaft ist, wird der Zählerstand um 4 erniedrigt.

Dies wird gemäß der Erfindung ausgenutzt, um die identifizierte MS wieder in das Netz zurückzuzwingen, indem der VBTS für eine gewisse Zeit auf dem PCH fehlerhafte Daten sendet und so der DSC im MS bis auf Null zurückgestuft wird und dann die MS einen Zellenwechsel durchführen muß, also vom VBTS wieder auf die Netz-Basisstation BTS1 zurückkehrt.

Um einen solchen Zellenwechsel nur für ausgewählte MS zu erzwingen, ist noch Folgendes vorgesehen:

Gewisse MS, von der VBTS bestimmt, sollen auf der VBTS weiter campen, alle anderen MS sollen nach der Abfrage relevanter Parameter durch die VBTS wieder auf die BTS1 oder eine andere BTSx des öffentlichen Netzes zurückkehren. Um die Cell-Reselection der MS im Erfassungsbereich möglichst gezielt einsetzen zu können, muß die Anzahl der Paging Groups maximiert werden. So können ein oder mehrere bestimmte Mobiles auf der VBTS weiterhin campen, während alle anderen eine Cell Reselection auf die BTS in der Umgebung durchführen.

Die Anzahl der Paging Groups kann über die Parameter BS_AG_BLKS_RES und BS_PA_ MFRMS auf dem CCH eingestellt werden (GSM 05.02) und wird über den BCCH abgestrahlt.

Die Paging Group einer MS wird durch die 3 letzten Ziffern der IMSI (auf der SIM-Karte abgelegt) bestimmt. (GSM 05.02 6.5.2, 6.5.3). Da die VBTS die IMSI der gerade eingebuchten MS kennt, werden nun auf dieser speziellen Paging Group für eine gewisse Zeit fehlerhafte Daten gesendet, die den DSC der MS auf 0 dekrementieren lassen und die MS zu einer Cell Reselection zwingen.

Nach erfolgter Cell Reselection auf eine BTSx des öffentlichen Netzes werden vom MS weiterhin die benachbarten Zellen (über die BA-Liste von BTSx definiert) pegelmäßig ausgewertet. Falls in der BA-Liste von BTSx sich auch der Kanal der VBTS befindet und die VBTS immer noch sendet, so wird die MS für die VBTS wahrscheinlich immer noch das beste Radio-Kriterium errechnen und eine Cell Reselection (frühestens nach 5sec) wieder auf die VBTS machen. Um dieses dauernde Hin und Her zwischen VBTS und BTS und die damit verbundene Signalisierungsbelastung der VBTS zu minimieren, wird die BA-Liste der VBTS modifiziert.

Am Standort der VBTS werden mit dem Zell-Monitor die BA-Listen der Nachbarzellen eingelesen und aus diesen Daten wird eine (oder mehrere) Nachbarzelle(n) ermittelt, deren BA-Liste den Kanal der VBTS nicht enthält. Diese Zelle wird dann in die BA-Liste der VBTS eingetragen und über den BCCH abgestrahlt. Dabei kann es, vor allem in Gebieten mit vielen räumlich kleinen Zellen, Zellen geben, von denen aus die MS erst nach dem Umweg über 2 oder mehr Zellen wieder eine Zelle erreicht, deren BA-Liste den Kanal der VBTS enthält. So können Verweildauern von 1 Min. bis zu unendlich erreicht werden, in denen die MS die VBTS nicht mehr aufsucht.

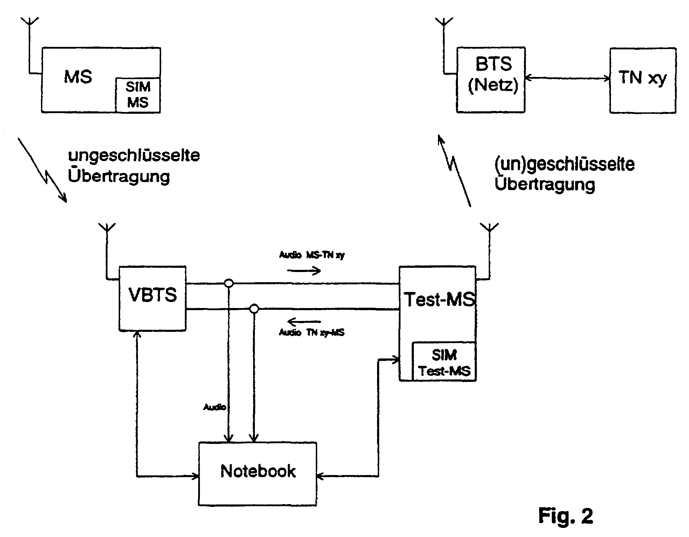

Mit der erfindungsgemäßen Anordnung einer virtuellen Basisstation können auch die abgehenden Gespräche der so identifizierten Mobilstation MS abgehört werden, wie dies Figur 2 zeigt. Es wird wieder von dem ersten Verfahrensschritt ausgegangen, nach welchem die abzuhörende MS auf der virtuellen Basisstation VBTS eingebucht hat, d.h. sie ist in dieser Zeit vom eigentlichen Netz und den Netz-Basisstationen BTS nicht erreichbar und kann auch nicht angerufen werden.

Das Test-Mobiltelefon TMS wird durch geeignete Maßnahmen auf einer benachbarten Netz-Basisstation eingebucht. Wegen der räumlichen Nähe zur VBTS würde die TMS an sich auf letzterer einbuchen, aus diesem Grunde muß durch geeignete Maßnahmen ein Einbuchen auf einer Netz-Basisstation erzwungen werden.

Ein Ruf der abzuhörenden MS kommt bei der VBTS an. Um die Verschlüsselung im GSM-Netz zu umgehen, signalisiert die VBTS der MS, die Verschlüsselung auszuschalten. Die gerufene Telefonnummer wird erfaßt und der Test-MS übergeben. Die Test-MS wählt dann diese Telefonnummer an, dabei wird gleichzeitig die Sprachsignalverbindung zwischen VBTS und Test-MS durchgeschaltet. Das Gespräch wird auf Kosten der SIM-Karte in der Test-MS geführt. Da dies eine normale SIM-Karte ist, kann die Übertragung zwischen Test-MS und Netz-BTS sowohl verschlüsselt als auch ungeschlüsselt sein. Die SIM-Karte in der MS wird mit keinen Gebühren belastet.

Bucht die Test-MS anstatt mit den Daten ihrer SIM-Test-MS mit den Daten der SIM-MS im öffentlichen Netz ein, so können für diese MS auch ankommende Gespräche mitgehört werden. In diesem Fall kommt der Ruf für die MS bei der Test-MS an, wird erfaßt und über die VBTS zur MS weitergeleitet. Die SIM-Karte der MS wird mit den Gebühren belastet.

Die aufgebaute Verbindung kann nun mit einer geeigneten Abhöreinrichtung, beispielsweise über den eingebauten Lautsprecher eines Notebooks, mitgehört werden. Vorzugsweise werden die beiden Audio-Pfade MS → TN xy (=L) und TN xy → MS (=R) an die Stereoeingänge des Notebooks als Stereosignal angeliefert. Damit ist über die Gesprächsrichtung eine eindeutige Zuordnung der Gesprächspartner möglich.

Mithörmöglichkeiten bestehen über die eingebauten Stereolautsprecher oder über einen extern anzuschließenden Kopfhörer.

Weiterhin kann das Gespräch gleichzeitig mitgeschnitten und als Protokoll abgespeichert werden (Zuordnung IMSI → File). Dieses Protokoll kann dann später ausgewertet werden.

## Patentansprüche

1. Verfahren zum Identifizieren eines Mobiltelefons (MS) in einem öffentlichen digitalen zellularen Mobilfunknetz,
wobei in räumlicher Nähe zum Mobiltelefon (MS) eine virtuelle Basisstation (VBTS) mit einem damit verbundenen Test-Mobiltelefon (TMS) betrieben wird,
wobei mittels des Test-Mobiltelefons (TMS) durch eine Zellenabfrage über die dem gewählten Standort zugeordnete Netz-Basisstation (BTS1) mit der höchsten Leistung die Liste (BA) aller dem Standort benachbarten Basisstationen ermittelt wird,
wobei davon eine Basisstation (BTS2) ausgewählt wird, die der dem gewählten Standort zugeordneten Basisstation (BTS1) höchster Leistung benachbart ist,
und wobei auf deren Kanalfrequenz (BCCH) dann die virtuelle Basisstation (VBTS) mit einer Leistung, die beim Mobiltelefon (MS) größer ist als die der dem Standort zugehörigen Netz-Basisstation (BTS1), und mit einem Bereichscode, der von dem dem Standort zugehörigen Bereichscode (LAC) abweicht, betrieben wird,
und wobei damit das Mobiltelefon (MS) veranlaßt wird, auf die virtuelle Basisstation (VBTS) zu wechseln und ihre Parameter (IMSI, IMEI) mit dieser auszutauschen.

2. Verfahren nach Anspruch 1,
**dadurch gekennzeichnet,**
**daß** nach dem Einbuchen des Mobiltelefons (MS) auf der virtuellen Basisstation (VBTS) auf dem Rufkanal (PCH) durch die virtuelle Basisstation so lange fehlerhafte Daten gesendet werden, bis das Mobiltelefon (MS) einen Basisstationwechsel ins öffentliche Netz vornimmt.

3. Verfahren nach Anspruch 2,
**dadurch gekennzeichnet,**
**daß** aus der bei der Zellenabfrage gewonnenen Liste (BA) aller benachbarten Basisstationen mindestens eine Nachbar-Basisstation ermittelt wird, deren Liste (BA) den von der virtuellen Basisstation (VBTS) benutzten Kanal nicht enthält, und diese Basisstation dann in die von der virtuellen Basisstation abgestrahlte Liste (BA) eingetragen wird.

4. Verfahren nach einem der vorhergehenden Ansprüche,
**dadurch gekennzeichnet,**
**daß** zum Abhören der von dem identifizierten Mobiltelefon (MS) abgehenden Gespräche das Test-Mobiltelefon (TMS) so eingestellt wird, daß es auf einer Netz-Basisstation (BTS) einbucht,
und bei einem bei der virtuellen Basisstation (VBTS) ankommenden Ruf des abzuhörenden Mobiltelefons (MS) die gerufene Telefonnummer erfaßt und an das Test-Mobiltelefon (TMS) übergeben wird, das dann seinerseits diese Telefonnummer im Netz anwählt und gleichzeitig die Gesprächsverbindung zwischen dem Test-Mobiltelefon (TMS) und der mit dem abzuhörenden Mobiltelefon (MS) verbundenen virtuellen Basisstation (VBTS) herstellt, über die dann die aufgebaute Verbindung abhörbar ist.

5. Verfahren nach einem der vorhergehenden Ansprüche,
**dadurch gekennzeichnet,**
**daß** zum Abhören der beim identifizierten Mobiltelefon (MS) ankommenden Gespräche das Test-Mobiltelefon (TMS) mit den Daten des Mobiltelefons (MS) im öffentlichen Netz einbucht, so daß ein bei dem Test-Mobiltelefon (TMS) ankommender Ruf für das abzuhörende Mobiltelefon (Ms) über die virtuelle Basisstation (VBTS) an das Mobiltelefon weitergeleitet wird.

## Claims

1. Method for identifying a mobile telephone (MS) in a public digital cellular mobile telephony network,
a virtual base station (VBTS) with a test mobile telephone (TMS) connected thereto being operated in spatial proximity to the mobile telephone (MS),
the network base station (BTS1), assigned to the selected location, having the highest power being used to ascertain, through a cell monitoring by means of the test mobile telephone (TMS), the list (BA) of all base stations adjacent to the location,
there being selected therefrom a base station (BTS2), which is adjacent to the base station (BTS1) of highest power assigned to the selected location,
and the virtual base station (VBTS) being then operated on its channel frequency (BCCH) with a power which, at the mobile telephone (MS), is greater than that of the network base station (BTS1) associated with the location, and with an area code which differs from the area code (LAC) associated with the location,
and the mobile telephone (MS) being thereby caused to reselect to the virtual base station (VBTS) and exchange its parameters (IMSI, IMEI) with the latter.

2. Method according to claim 1,
**characterized in that**
following the inscription of the mobile telephone (MS) on the virtual base station (VBTS), erroneous data is transmitted on the paging channel (PCH) by the virtual base station until the mobile telephone (MS) performs a base-station reselection to the public network.

3. Method according to claim 2,
**characterized in that**
from the list (BA) of all adjacent base stations, obtained in the cell monitoring, there is ascertained at least one adjacent base station whose list (BA) does not contain the channel used by the virtual base station (VBTS), and this base station is then entered in the list (BA) emitted by the virtual base station.

4. Method according to any one of the preceding claims,
**characterized in that**
for the purpose of intercepting the outgoing calls from the identified mobile telephone (MS), the test mobile telephone (TMS) is set so that it inscribes on a network base station (BTS),
and, in the case of a call of the mobile telephone (MS) to be intercepted being received by the virtual base station (VBTS), the called telephone number is captured and transferred to the test mobile telephone (TMS), which then, in turn, dials this telephone number in the network and simultaneously establishes the voice connection between the test mobile telephone (TMS) and the virtual base station (VBTS), connected to the mobile telephone (MS) to be intercepted, via which the established connection can then be intercepted.

5. Method according to any one of the preceding claims,
**characterized in that**
for the purpose of intercepting the calls received by the identified mobile telephone (MS), the test mobile telephone (TMS) inscribes with the data of the mobile telephone (MS) in the public network, so that a call for the mobile telephone (MS) to be intercepted that is received by the test mobile telephone (TMS) is forwarded to the mobile telephone via the virtual base station (VBTS).

## Revendications

1. Procédé d'identification d'un téléphone mobile (MS) dans un réseau public numérique cellulaire de téléphonie mobile,
une station de base virtuelle (VBTS) reliée à un téléphone mobile de test (TMS) étant utilisée à proximité du téléphone mobile (MS),
la liste (BA) de toutes les stations de base voisines étant déterminée à l'aide du téléphone mobile de test (TMS) par une demande de cellule par l'intermédiaire de la station de base de réseau (BTS1) assignée à l'endroit sélectionné ayant la puissance la plus grande,
une station de base (BTS2), voisine de la station de base (BTS1) ayant la plus grande puissance et assignée à l'endroit choisi, étant sélectionnée,
et la station de base virtuelle (VBTS) étant utilisée, sur cette fréquence de canal (BCCH), avec une puissance qui est plus importante pour le téléphone mobile (MS) que celle de la station de base du réseau (BTS1) et avec un code de zone différent du code de zone (LAC) correspondant à l'endroit,
et le téléphone mobile (MS) pouvant ainsi passer sur la station de base virtuelle (VBTS) et échanger ses paramètres (IMSI, IMEI) avec celle-ci.

2. Procédé selon la revendication 1, **caractérisé en ce que**, après l'enregistrement du téléphone mobile (MS) dans la station de base virtuelle (VBTS) sur le canal d'appel (PCH), des données erronées sont envoyées par le station de base jusqu'à ce que le téléphone mobile (MS) effectue un changement de station de base dans le réseau public.

3. Procédé selon la revendication 2, **caractérisé en ce qu'**à partir de la liste (BA) de toutes des stations de base voisines, obtenue lors de la demande de cellule, au moins une station de base voisine est déterminée, dont la liste (BA) ne comprend pas le canal utilisé par la station de base virtuelle (VBTS) et cette station de base est alors inscrite dans la liste (BA) émise dans la station de base virtuelle.

4. Procédé selon l'une des revendications précédentes, **caractérisé en ce que**, pour écouter les conversations provenant du téléphone. mobile (MS) identifié, le téléphone mobile de test (TMS) est agencé de sorte qu'il s'enregistre sur une station de base du réseau (BTS) et **en ce que**, lors d'un appel du téléphone mobile (MS) à écouter arrivant sur la station dé base virtuelle (VBTS), le numéro appelé est intercepté et transmis au téléphone mobile de test (TMS) qui saisit alors ce numéro de téléphone dans le réseau et établit en même temps la liaison entre le téléphone mobile de test (TMS) et la station de base virtuelle (VBTS) reliée au téléphone mobile (MS) à écouter, par l'intermédiaire de laquelle la liaison peut être écoutée.

5. Procédé selon l'une des revendications précédentes, **caractérisé en ce que**, pour écouter les conversations reçues par le téléphone mobile (MS) identifié, le téléphone mobile de test (TMS) est enregistré dans le réseau public avec les données du téléphone mobile (MS), de telle sorte qu'un appel arrivant dans le téléphone mobile de test (TMS) pour le téléphone mobile (MS) à écouter soit transmis au téléphone mobile par l'intermédiaire de la station de base virtuelle (VBTS).
